# EUROPÄISCHE PATENTSCHRIFT

(11) **EP 2 976 938 B1**
(45) Veröffentlichungstag und Bekanntmachung des Hinweises auf die Patenterteilung: **15.11.2017**
(21) Anmeldenummer: 15173670.9
(22) Anmeldetag: 24.06.2015
(51) Int. Cl.: A01G 1/08, A01G 9/02

(54) **HOCHBEET**
RAISED BED
PLATE-BANDE SURELEVEE

(30) Priorität: 22.07.2014 DE 102014110273
(43) Veröffentlichungstag der Anmeldung: 27.01.2016
(73) Patentinhaber: Lang, Dieter, 96342 Stockheim (DE)
(72) Erfinder: Lang, Dieter, 96342 Stockheim (DE)
(74) Vertreter: Witte, Weller & Partner Patentanwälte mbB

(56) Entgegenhaltungen:
- EP-A2- 0 860 109
- AT-A1- 511 489
- AT-U1- 6 441
- AU-A4- 2009 100 546
- DE-C1- 4 327 316
- DE-U1-202009 010 705
- US-A- 4 905 409
- US-A1- 2012 204 486

## Beschreibung

Die Erfindung betrifft ein Hochbeet bestehend aus einem umfänglich geschlossenen Körper in Form einer hochstehenden Wand.

Ein gattungsgemäßes Hochbeet, welches aus mehreren Wandsegmenten zusammengesetzt ist, ist aus der DE 20 2009 010 705 U1 bekannt.

Ein Hochbeet ist eine Variante der klassischen ebenerdigen Beetanlage, Daher versteht man unter Hochbeeten Gartenbeete, die nicht ebenerdig angelegt sind, sondern sich über das übliche Beetniveau hinaus erheben. Bei Hochbeeten fällt das Bücken bei der Gartenarbeit durch die Höherstellung des Beetes weg. Hochbeete bestehen im Allgemeinen aus einem umfänglich geschlossenen Körper in Form einer hochstehenden Wand. Ein Hochbeet kann aus Betonsteinen, aus Holz oder Kunststoffelementen aufgebaut sein. Da ein Hochbeet in einem Garten einem Betrachter sofort ins Auge fällt, da es sich von der Gartenbodenebene abhebt, ist eine ansehnliche Ausgestaltung erwünscht.

Ferner sind Beetformen sinnvoll, bei denen die gesamte Fläche des Hochbeetes von der Außenseite der hochstehenden Wand her leicht zugänglich ist.

Bei Hochbeetsystemen mit variierenden Formen und Größen ist es wünschenswert, dass die Bauelemente der Hochbeete einfach verpackt, transportiert und vor Ort unkompliziert aufgebaut werden können.

Es ist daher Aufgabe der vorliegenden Erfindung, ein Hochbeet zu schaffen, das einfach aufbaubar ist, ein ansprechendes Erscheinungsbild aufweist und ferner einen problemlosen Zugang zur Beetfläche ermöglicht.

Erfindungsgemäß wird die Aufgabe dadurch gelöst, dass die Wand aus folgenden Wandelementen aufgebaut ist, nämlich aus zwei hochstehenden plattenförmigen Wandelementen, die an gegenüberliegenden hochstehenden Kanten jeweils eine etwa 90°-Abwinklung aufweisen, wobei jedes dieser Wandelemente zu einem im Horizontalschnitt Ω-förmigen Element geformt ist, die spiegelbildlich und in einem Abstand zueinander derart angeordnet sind, dass sich die offenen Enden der Ω-förmigen Elemente gegenüberstehen, und dass die beiden Ω-förmigen Elemente über die jeweils gegenüberliegenden Abwinklungen mit jeweils einem weiteren gekrümmten plattenförmigen Wandelement verbunden sind.

Diese Ausgestaltung ergibt ein Grundelement eines Hochbeetes, das in Draufsicht bzw. im Horizontalschnitt grob die Form eines vierblättrigen Kleeblattes aufweist. Die beiden gegenüberliegenden Ω-förmigen Elemente sind mit den weiteren gekrümmten plattenförmigen Wandelementen über die Abwinklungen verbunden. Im einfachsten Fall des Grundelements müssen also lediglich die beiden spiegelbildlich gegenüberliegenden Ω-förmigen Elemente jeweils mit einem weiteren plattenförmigen Wandelement verbunden werden. Durch die Krümmung der plattenförmigen Wandelemente und die Krümmung der Ω-förmigen Elemente entsteht im Grundelement ein Körper mit vier gekrümmten oder ausgebauchten Wandabschnitten. Dies resultiert nicht nur in einer ansprechenden Form, sondern die gekrümmten Wandabschnitte erlauben eine gute Zugänglichkeit zu der Hochbeetfläche. In den Bereichen, in denen die gekrümmten Abschnitte miteinander verbunden sind, ist von der Außenseite eine Art Einschnitt vorhanden, über den eine Person gut Zugang zu dem zentral mittigen Bereich der Hochbeetfläche erlangen kann, so dass diese relativ großflächig ausgebildet werden kann. Die Krümmungen der Ω-förmigen Elemente und die Krümmungen der plattenförmigen Wandelemente, die diese beiden Ω-förmigen Elemente untereinander verbinden, können nun in verschiedenen Varianten, Größen und Krümmungsradien ausgebildet werden, so dass eine Vielzahl an ansprechenden Gesamterscheinungsbildern möglich ist. Die Krümmungen bzw. Ausbauchungen können bei vorgeformten Ω-förmigen Elementen variantenreich ausgestaltet werden. So sind neben runden Krümmungen auch eckige Formen, wie z. B. Trapezformen möglich. Sind die Krümmungen alle in etwa gleich ausgebildet, entsteht ein in sich symmetrisches Hochbeet, das einem vierblättrigen Kleeblatt ähnelt. Ein solches Grundelement ist aus wenigen Bauteilen zusammensetzbar, und zwar aus nur vier plattenförmigen Wandelementen, nämlich den beiden gegenüberliegenden Ω-förmigen Elementen und den beiden diese verbindenden weiteren gekrümmten plattenförmigen Wandelementen. Dies ist auch herstellungstechnisch einfach durchzuführen, und außerdem ist die Montage einfach durchführbar. Die Wandelemente können bereits in der Endform vorgeformt sein, oder gegebenenfalls aus biegeelastischen Materialien hergestellt sein, so dass sie vor Ort in diese Form bei der Montage gebracht werden können. In diesem Fall werden dann zum einen Materialien eingesetzt werden, die sich für den Hochbeetbau eignen, die also den Witterungsbedingungen und den Bodenbedingungen widerstehen können und die entsprechend biegeelastisch ausgebildet sind. Dabei handelt es sich beispielsweise um biegsame Kunststoffmaterialien oder metallische Materialien, beispielsweise entsprechend dünne Bleche aus Eisenmaterialien wie Stahlbleche, verzinkte Stahlbleche oder Edelstahlbleche. Durch Auswahl der Wandstärke kann man die bereits endfertig vorgeformte Variante bereitstellen, oder bei entsprechend dünnen Wandstärken können ebene plattenförmige Elemente vor Ort in die gekrümmte Ausrichtung bzw. in die Ω-Form gebracht werden. Bei den Ω-förmigen Wandelementen wären das beispielsweise rechteckförmige Platten, die an gegenüberliegenden hochstehenden Kanten die entsprechenden Abwinklungen aufweisen. Zur Montage sind dann entsprechende Bohrungen und Schrauben oder Nieten vorgesehen, um die vier Grundbauelemente untereinander zu verbinden.

In einer weiteren Ausgestaltung der Erfindung sind die jeweils weiteren gekrümmten plattenförmigen Elemente spiegelbildlich ausgebildet.

Diese hat zum einen fertigungstechnisch den Vorteil, dass gleich ausgebildete Elemente als die weiteren plattenförmigen Elemente bereitgestellt werden können. Daraus resultiert zum anderen ein symmetrisches Hochbeet.

In einer weiteren Ausgestaltung entsprechen die Krümmungen der weiteren gekrümmten plattenförmigen Elemente in etwa den Krümmungen der Ω-förmigen Elemente.

Bei dieser Ausgestaltung entsteht ein hochsymmetrisches Hochbeet, das von allen Seiten her gleichermaßen günstig zugänglich ist.

In einer weiteren Ausgestaltung der Erfindung weisen die Rundungen jeweils einen Halbkreis auf.

Diese Geometrie trägt sehr zur Stabilität der Wand auf, so dass relativ dünnwandige Materialien eingesetzt werden können und erlaubt einen guten Zugang zur Hochbeetfläche im Bereich der Halbkreise.

In einer weiteren Ausgestaltung der Erfindung ist eines der weiteren gekrümmten plattenförmigen Elemente als ein seitliches Abschlusselement der Wand ausgebildet und das andere, gegenüberliegende weitere gekrümmte Wandelement ist als ein Erweiterungselement ausgebildet.

Diese Maßnahme hat den Vorteil, dass ein Basiselement möglich ist, also zwei spiegelbildlich gegenüberliegende Ω-förmige Elemente, die an einer Seite über ein gekrümmtes plattenförmiges Element verbunden sind.

An der gegenüberliegenden Seite stehen die Abwinklungen der beiden Ω-förmigen Elemente vor. An diese Abwinklungen können dann Erweiterungselemente angebracht werden, bevor diese dann endseitig wieder über ein Abschlusselement abgeschlossen werden. Dadurch ist es dann möglich, ausgehend von einem solchen Basiselement eines oder mehrere Erweiterungselemente anzusetzen. Es ist auch möglich, an beiden Enden von gegenüberliegenden Ω-förmigen Elementen Erweiterungselemente anzusetzen, so dass ein solches Basiselement links und rechts mit Erweiterungselementen versehen werden kann.

In einer weiteren Ausgestaltung der Erfindung weist das Erweiterungselement zumindest ein weiteres Paar an gegenüberliegenden Ω-förmigen Elementen auf, die über deren Abwinklungen an einem Ende mit den Abwinklungen der bereits vorhandenen Ω-förmigen Elemente verbunden sind und die am anderen Ende in der Erweiterungsrichtung über ein die Wand abschließendes gekrümmtes Abschlusselement verbunden sind.

Diese Maßnahme hat den Vorteil, dass durch Bauelemente, die gleich ausgebildet sind wie die bereits beim Basiselement vorhandenen Elemente, eine Erweiterung durchgeführt werden kann. So kann man beispielsweise in einer Richtung oder auch in beiden Richtungen der Abwinklungen des zentralen Ω-Doppelpaares an einer oder an beiden Seiten ein oder mehrere weitere spiegelbildlich gegenüberliegende Ω-förmigen Elemente ansetzen und diese an einem Ende oder entsprechend an beiden Enden abschließen.

Geht man von dem Grundelement aus, also den beiden gegenüberliegenden Ω-förmigen Elementen und den endseitigen abschließenden weiteren gekrümmten plattenförmigen Elementen, kann man schon durch Zukauf und Einsatz von zwei weiteren entsprechenden Ω-förmigen Elementen das Hochbeet verlängern. Dem sind dann keine weiteren Grenzen gesetzt, man kann das dann durch zwei, drei, vier oder mehre entsprechende Ω-förmige Elementenpaare weiter fortsetzen.

Daher kann sich der Benutzer selbst, durch einfach herzustellende und sehr ähnlich ausgebildete Bauelemente ein Hochbeet mit einer Länge nach seinem Wunsch zusammensetzen.

In einer weiteren Ausgestaltung der Erfindung weist das Erweiterungselement hochstehende plattenförmige Zwischenelemente auf, die jeweils mit den Abwinklungen der bereits vorhandenen Ω-förmigen Elementen verbunden sind, und die derart abgewinkelt oder gebogen sind, dass die Erweiterungsrichtung von einer Richtung, die der Spiegelebene der bereits vorhandenen gegenüberliegenden Ω-förmigen Elemente entspricht, abweicht.

Diese Maßnahme hat den Vorteil, dass auch abgewinkelte oder gekrümmt verlaufende Hochbeete gebaut werden können. Es ist letztendlich auch möglich, diese zu in sich geschlossenen ringförmigen Elementen in der Art einer Atriumbauweise zusammenzusetzen, wobei dann allerdings sichergestellt werden muss, dass jeweils Zugang auch von der Innenseite des Atriums zu der Hochbeetfläche möglich ist.

In einer besonders vorteilhaften Ausgestaltung besteht die Wand aus biegsamem plattenförmigem Material.

Diese Maßnahme hat, wie bereits erwähnt, den Vorteil, dass die Wand aus einzelnen Bauelementen hergestellt werden kann, die zunächst in einer ebenen plattenförmigen Ausrichtung vorhanden sind, und lediglich die Abwinklungen bei den Ωförmigen Elementen aufweisen. Diese biegsamen plattenförmigen Materialien können dann vor Ort zu den gebogenen Elementen geformt werden.

Demzufolge ist besonders vorteilhaft, dass die Wandelemente aus ursprünglich ungebogenen plattenförmigen Wandelementen bereitstellbar sind, wobei die späteren Ω-förmigen Elemente bereits mit den Abwinklungen versehen sind und dass die ungebogenen plattenförmigen Elemente bei der Montage der Wand zu den gekrümmten Wandkörpern biegbar sind.

In einer weiteren Ausgestaltung der Erfindung sind die Ω-förmigen Elemente über eine Strebe, die das offene Ende des Ω-förmigen Elementes überspannt, in der Ω-förmigen Ausrichtung haltbar.

Diese Maßnahme hat den Vorteil, dass bei der Montage die Ω-förmigen Elemente durch Anbringen der Strebe in dieser Form gehalten werden können. Dabei kann die Strebe als Streifen ausgebildet sein, dessen gegenüberliegende Enden jeweils mit einer Abwinklung eines Ω-förmigen Elementes verbunden sind.

In einer weiteren Ausgestaltung der Erfindung sind zwei jeweils gegenüberliegende Ω-förmige Elemente über Abstandhalter in dem Abstand gehalten.

Dies erleichtert nicht nur die Montage, sondern trägt auch insgesamt zur Stabilität des endfertigen Hochbeetes dahingehend bei, dass die eingefüllten Erdmassen keine Verformung, insbesondere ein voneinander weg Bewegen der gegenüberliegenden Ω-förmigen Elemente verursachen kann. Je nach Größe und Höhe der Wände der Hochbeete können dazu mehrere Abstandhalter auf unterschiedlichen Höhenniveaus vorgesehen sein.

Auch hier ist von Vorteil, dass die Abstandhalter an ihren Enden jeweils mit einer Abwinklung eines der gegenüberliegenden Ω-förmigen Elemente verbunden sind.

Diese Abwinklungen haben also nicht nur die Funktion, dass dadurch die einzelnen Wandelemente untereinander verbunden sind, sondern dienen zugleich als Montagestellen für die Streben, um die Ω-förmigen Elemente in der Ω-Form zu erhalten, und auch noch als Befestigungsstellen für die Abstandhalter der gegenüberliegenden Ωförmigen Elemente.

Ein Verfahren zum Montieren eines Hochbeetes, das aus einem umfänglich geschlossenen Körper in Form einer hochstehenden Wand aufgebaut ist, zeigt erfindungsgemäß folgende Schritte auf, nämlich
- Bereitstellen von zwei hochstehenden ungebogenen plattenförmigen Wandelementen, die an gegenüberliegenden hochstehenden Kanten eine etwa 90°-Abwinklung aufweisen,
- Bereitstellen von zumindest zwei weiteren ungebogenen plattenförmigen Wandelementen,
- Biegen der beiden plattenförmigen Wandelementen mit den Abwinklungen zu einem im Horizontalschnitt Ω-förmigen Element,
- spiegelbildliches Anordnen der beiden Ω-förmigen Elemente in einem Abstand und derart, dass deren offene Seiten des Ω gegenüberliegen,
- Verbinden der jeweils gegenüberliegenden Abwinklungen der beiden Ωförmigen Elemente jeweils über gegenüberliegende Enden von weiteren plattenförmigen Elementen, wobei der Abstand derart gewählt ist, dass die umfänglich ungebogenen weiteren plattenförmigen Elemente dabei bogenförmig gekrümmt werden.

In einer weiteren Ausgestaltung des Verfahrens wird an zumindest einer Seite der gegenüberliegenden Ω-förmigen Elemente zumindest ein weiteres Erweiterungselement montiert.

In einer besonderen Ausgestaltung wird das Hochbeet als Bausatz angeboten, in dem die zuvor erwähnten Wandelemente als einzelne Elemente enthalten sind.

Dabei ist besonders vorteilhaft, dass in diesem Bausatz die Wandelemente in ungebogenem Zustand enthalten sind.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand der beiliegenden Zeichnungen näher beschrieben und erläutert. Es zeigen:
- Fig. 1: perspektivisch ein Grundelement eines Hochbeetes,
- Fig. 2: eine Explosionsdarstellung der wesentlichen Bauelemente des Grundelementes von Fig. 1, und zwar in noch ungebogenem Zustand,
- Fig. 3a bis 3c: einen Montageschritt, bei dem ein ebenes plattenförmiges Element mit Abwinklungen unter Zuhilfenahme einer Strebe zu einem Ω-förmigen Element geformt wird,
- Fig. 4: eine der Fig. 1 entsprechende perspektivische Darstellung, teilweise in Explosionsdarstellung während des Zusammenbaus des Grundelementes von Fig. 1,
- Fig. 5: eine der Fig. 1 entsprechende Darstellung eines Basiselementes, das an einer Seite erweiterbar ist,
- Fig. 6: eine der Fig. 5 dargestellte Darstellung, bei der das Basiselement mit einer ersten Ausgestaltung eines Erweiterungselementes in einer Richtung erweitert ist,
- Fig. 7: eine der Fig. 6 entsprechende Darstellung einer Erweiterungsvariante, die ums Eck geführt ist,
- Fig. 8: eine weitere Erweiterungsvariante mit gekrümmter Erweiterungsrichtung,
- Fig. 9: eine schematische Draufsicht auf ein zweites Ausführungsbeispiel eines Grundelements, das aus bereits vorgebogenen Wandelementen aufgebaut ist, und
- Fig. 10: eine der Fig. 9 entsprechende Darstellung, bei der ein Grundelement dargestellt ist, das aus vier im Wesentlichen identisch ausgebildeten Ω-förmigen Elementen aufgebaut ist.

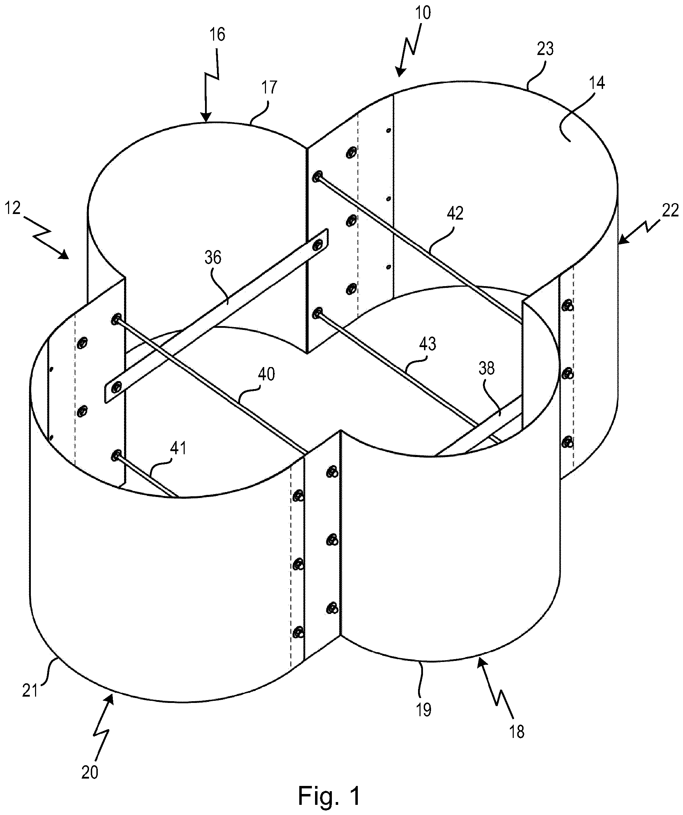

Ein in Fig. 1 dargestelltes Grundelement 12 eines erfindungsgemäßen Hochbeetes ist in seiner Gesamtheit mit der Bezugsziffer 10 bezeichnet. Das Hochbeet 10 besteht aus einem umfänglich geschlossenen Hohlkörper in Form einer hochstehenden Wand 14. Der Körper ist sowohl an dessen Unterseite als auch an dessen Oberseite offen.

Das Grundelement 12 ist aus zwei Ω-förmigen Elementen 16 und 18 aufgebaut, die sich spiegelbildlich und in einem Abstand gegenüberstehen, und zwar derart, dass die offenen Enden des Ω-förmigen Elementes sich gegenüberstehen. Die jeweils seitlichen äußeren Enden der Ω-förmigen Elemente 16 und 18 sind über ein erstes weiteres Wandelement 20 bzw. ein zweites weiteres Wandelement 22 untereinander verbunden.

Die weiteren Wandelemente 20 und 22 weisen Krümmungen 21 und 23 auf, die zumindest einen Halbkreis enthalten und die in etwa den Rundungen 17 und 19 der Ω-förmigen Elemente 16 und 18 entsprechen.

Somit ergibt sich dem Betrachter ein Hochbeet 10, das grob, in Draufsicht oder in einem horizontalen Querschnitt gesehen, die Form eines vierblättrigen Kleeblattes aufweist, wobei die Kontur der "Kleeblätter" durch die Rundungen 17 und 19 bzw. 21 und 22 bestimmt wird. Diese können auch eckig, z. B. trapezförmig ausgestaltet sein.

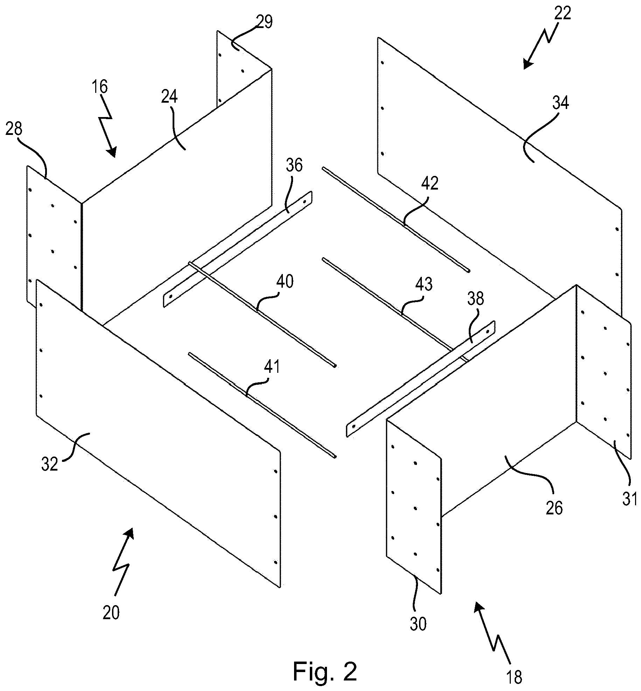

Der nähere Aufbau und die Montage eines Grundelements 12 des Hochbeetes 10 soll nunmehr in Zusammenhang mit den Fig. 2 bis 4 näher beschrieben werden.

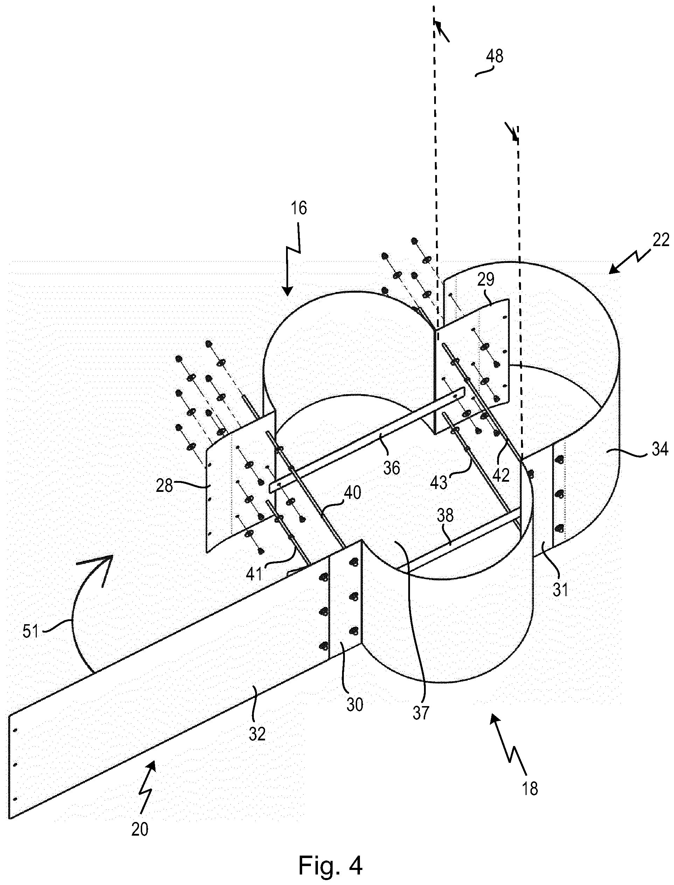

In Fig. 2 sind die Bauelemente des Grundelements 12 in Explosionsansicht dargestellt, wobei aus Übersichtlichkeitsgründen die Schrauben, wie sie beispielsweise in Fig. 4 dargestellt sind, weggelassen wurden.

In Fig. 2 ist eine Ausführungsform dargestellt, bei der die Bauteile, die die Wand 14 des Grundelementes 12 aufbauen, aus ursprünglich ungebogenen ebenen plattenförmigen Elementen aufgebaut ist. So ist ersichtlich, dass das Bauelement, das später einmal das Ω-förmige Element 16 bildet, als ein ausgänglich ebenes plattenförmiges Wandelement 24 ausgebildet ist, das an seinen gegenüberliegenden Enden mit einer etwa rechtwinkligen Abwinklung 28 bzw. 29 versehen ist. Dabei stehen die Abwinklungen 28 und 29 gleichsinnig von dem Wandelement 24 ab.

Das plattenförmige Wandelement 24 ist in einem Ausführungsbeispiel aus einem verzinkten Stahlblech mit einer Wandstärke von 1 mm ausgebildet.

In einer anderen Ausgestaltung, die allerdings etwas kostenträchtiger ist, besteht dieses Wandelement 24 aus einem Edelstahl mit einer Wandstärke von 0,8 mm.

Die Höhe des plattenförmigen Wandelementes 24 beträgt 90 cm, die Breite etwa 1,30 m. Die Länge der Abwinklungen 28 bzw. 29 beträgt etwa 30 cm. Es ist ersichtlich, dass in den Abwinklungen 28 und 29 verschiedene Bohrungen eingebracht sind, deren Sinn und Zweck nachfolgend anhand der Montageschritte näher erläutert wird.

Aus Fig. 2 ist ersichtlich, dass ein weiteres plattenförmiges Wandelement 26 mit zwei Abwinklungen 30 und 31 vorhanden ist, das identisch aufgebaut ist wie das zuvor beschriebene plattenförmige Wandelement 24.

Das erste weitere Wandelement 20 ist aus einer ebenen rechteckförmigen Platte hergestellt, die eine Breite von etwa 1,60 m und ebenfalls eine Höhe von 90 cm aufweist. Diese beiden gegenüberliegenden Wandelemente, nämlich das erste weitere Wandelement 20 und das zweite weitere Wandelement 22 sind ebenfalls identisch aufgebaut. Im Bereich deren gegenüberliegenden hochstehenden Seitenkanten sind wieder einige Bohrungen angebracht.

Zu den Bauteilen des Grundelementes 12 gehören ferner zwei Streben 36, 38, die aus metallischen Streifen desselben Materials hergestellt sind wie die Wandelemente 20, 22, 24 und 26. Ferner sind noch vier Abstandhalter 40, 41, 42, 43 vorgesehen, die jeweils als Stangen ausgebildet sind und die an ihren gegenüberliegenden Enden mit Außengewinden versehen sind. Der Außendurchmesser der Stangen ist so ausgebildet, dass diese im Bereich ihrer endseitigen Außengewinde in die zahlreichen Bohrungen in den Abwinklungen eingeschoben werden können, wie das nachfolgend noch erläutert wird.

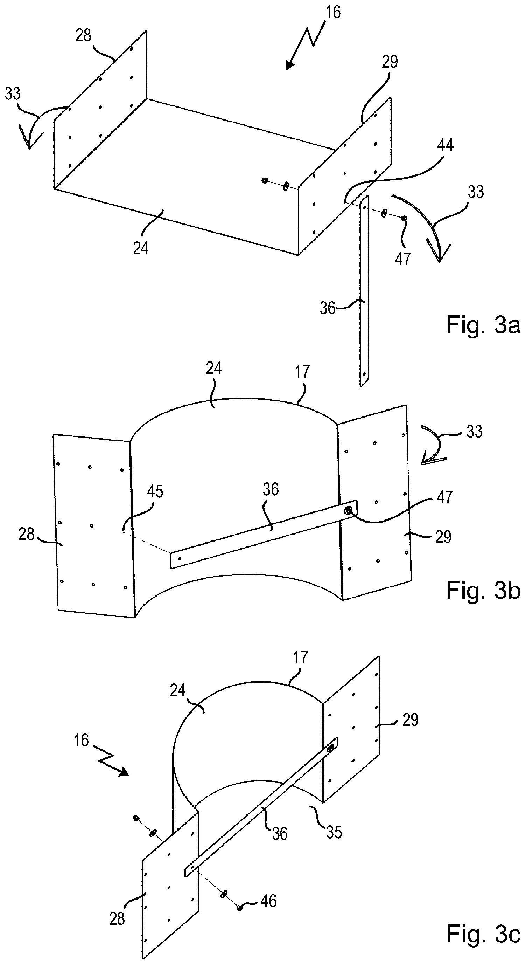

In der Figurenfolge von Fig. 3a bis Fig. 3c ist dargestellt, wie aus dem ausgänglich plattenförmigen Wandelement 24 mit den Abwinklungen 28 und 29 das Ωförmige Element 16 hergestellt wird. Aus Fig. 3a ist ersichtlich, dass zunächst eine Strebe 36 an einem Ende über eine Schraube 47 an einer entsprechenden Bohrung 44 in der Abwinklung 29 befestigt wird. Anschließend wird das plattenförmige Wandelement 24 so gebogen, dass die Rundung 17 entsteht, wobei das von Hand erfolgen kann, indem, wie das in Fig. 3a durch die Pfeile 33 angedeutet wird, die Abwinklungen 28 und 29 "nach unten" gebogen werden. Dies wird so weit durchgeführt, bis das der Schraube 47 gegenüberliegende Ende der Strebe 36 vor einer entsprechenden Bohrung 45 in der Abwinklung 28 zum Liegen kommt.

Diese Version ist in Fig. 3c dargestellt, d.h. dieses Ende der Strebe 36 ist nunmehr über eine Schraube 46 mit der Abwinklung 28 verbunden.

Dadurch ist nun das Ω-förmige Element 16 des Grundelementes 12 ausgebildet.

Aus Fig. 3c ist ersichtlich, dass sich nunmehr die Abwinklungen 28 und 29 in einer Ebene erstrecken. Ferner ist aus Fig. 3c ersichtlich, dass die Strebe 36 das offene Ende 35 der Rundung 17 des Ω-förmigen Elementes 16 überspannt und dieses in dieser Ω-Ausrichtung hält. Aufgrund der Biegsamkeit der eingesetzten dünnwandigen Materialien ist dieser Umformvorgang ohne Zuhilfenahme von Biegewerkzeugen oder dergleichen durch eine Person einfach durchzuführen. In einem nächsten Schritt wird das identisch aufgebaute Ω-förmige Element 18 hergestellt, indem das in Fig. 2 ersichtliche plattenförmige Wandelement 26 mit seinen Abwinklungen 30 und 31 entsprechend umgeformt und über die Strebe 38 gehalten wird.

Wie insbesondere aus Fig. 4 ersichtlich, werden nunmehr die beiden Ωförmigen Elemente 16 und 18 in einem Abstand 48 gegenübergestellt. Um diese Elemente in diesem Abstand zu halten, werden die stangenförmigen Abstandhalter 40, 41, 42 und 43 zwischen diese Elemente 16 und 18 gebracht und mit den Abwinklungen 28 und 30 bzw. 29 und 31 verschraubt.

Nunmehr wird, wie das in Fig. 4 auf der linken Seite dargestellt ist, beispielsweise das erste weitere Wandelement 20 über eine seiner seitlich hochstehenden Kanten mit der Abwinklung 30 des Ω-förmigen Elementes 18 verschraubt.

Anschließend wird die Platte 32 in Richtung auf die Abwinklung 28 des gegenüberliegenden Ω-förmigen Elementes 16 gebogen, wie das in Fig. 4 durch den Pfeil 51 angedeutet ist.

Auch dieser Vorgang kann von einer Person ohne weitere Zuhilfenahme von Biegewerkzeugen durchgeführt werden.

Aus Fig. 4 ist auf der rechten Seite ersichtlich, dass nach diesem Biegevorgang das bis zu diesem Zeitpunkt freie Ende der jeweiligen Platte, hier der Platte 34, vor der "Außenseite" der entsprechenden Abwinklung 29 zum Liegen kommt, so dass dann entsprechende Schrauben in die Bohrungen eingeschoben werden können und die Bauelemente Ω-förmiges Element 18 und Platte 34 miteinander verschraubt werden.

Nach Durchführung dieser Vorgänge entsteht das Grundelement 12, wie es in Fig. 1 dargestellt. Es ist ersichtlich, dass das Hochbeet 10 aus einer umfänglich geschlossen Wand 14 ausgebildet ist, die durchgehend dieselbe Höhe aufweist, nämlich 90 cm. Die Rundungen 17, 19 bzw. 21 und 23 weisen jeweils einen etwa halbkreisförmigen Rundungsabschnitt und denselben Krümmungsradius auf.

Dadurch entsteht das in Fig. 1 ersichtliche symmetrische Gebilde des Grundelementes 12.

Die Grundfläche des Grundelementes 12 beträgt in der dargestellten Ausführungsform etwa 2,4 m².

Das Hochbeet 10 kann nun beispielsweise in einem Garten auf einem Grund abgestellt werden, und der Innenraum kann dann mit entsprechendem Bodenmaterial gefüllt und bepflanzt werden.

Aufgrund der Rundungen 17, 19 und 21, 23 ist der Innenraum des Hochbeetes 10 von allen Seiten her sehr gut zugänglich.

An die Nischen, in denen die Ω-förmigen Elemente 16 bzw. 18 mit den weiteren Wandelementen 20 und 22 verbunden sind, kann eine Person so nahe herantreten, dass der gesamte mittige zentrale Bereich des Hochbeetes 10 leicht zugänglich ist, um auch in diesem Bereich problemlos Vorgänge durchführen zu können.

Das dargestellte Grundelement 12 ist aus etwa rechteckförmigen Bauelementen aufgebaut, die somit geradlinig verlaufende und parallele Ober- und Unterkanten aufweisen.

Falls es aus dekorativen Gründen erwünscht ist, kann beispielsweise die Oberkante des Hochbeetes 10 mit dekorativen Elementen ausgebildet sein, beispielsweise mit Rundungen, Ornamenten, Zacken oder dergleichen, wenn das erwünscht ist.

Die Abstandhalter 40 bis 43 halten nicht nur die Ω-förmigen Elemente 16 und 18 in dem entsprechenden Abstand 48, sondern dienen auch zur Stabilisierung der Wand 14 gegen Ausbauchungen durch das darin aufgenommene Material. Entsprechend sorgen die Streben 36 und 38 dafür, dass sich die Rundung 17 bzw. 19 des jeweiligen Ωförmigen Elementes 16 und 18 nicht aufweitet oder verformt. Anstatt der zuvor beschriebenen metallischen Materialien in den genannten Wandstärken können auch, insbesondere wenn ein wesentlich kleineres Hochbeet 10 aufgebaut werden soll, andere und dünnere Materialien eingesetzt werden.

Bei Wandstärken, die 1,3 bis 1,6 mm überschreiten, wird es bei Blechmaterialien dann schwierig werden, die Biegungen von Hand durchzuführen. Dann müssten die Bauteile beispielsweise durch Walzen entsprechend vorgeformt werden. Anstatt der beschriebenen metallischen Materialien können auch Kunststoffmaterialien wie flexible Polyethylene oder dergleichen herangezogen werden, so dass dann die Wand 14 aus entsprechenden Kunststoffmaterialien aufgebaut ist.

In Zusammenhang mit den Fig. 1 bis 4 wurde ein Grundelement 12 eines Hochbeetes 10 beschrieben.

Durch den modularen Aufbau des Grundelementes 12 aus einzelnen Wandelementen ist es aber auch möglich, weitere Ausgestaltungen auszubilden.

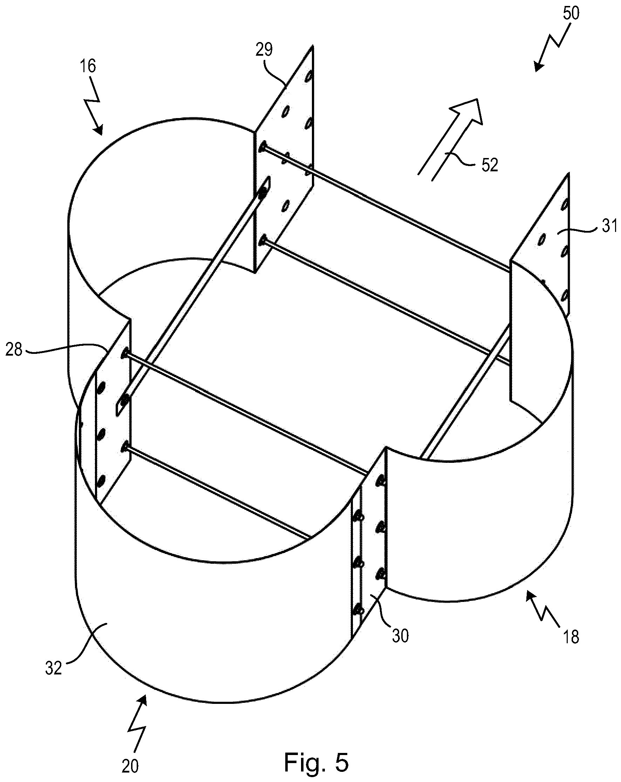

In Fig. 5 ist ein sogenanntes Basiselement 50 dargestellt, das, wie das aus dem Vergleich mit Fig. 1 ersichtlich ist, so aufgebaut ist, dass zwei gegenüberliegende Ω-förmige Elemente 16 und 18 an einer Seite oder einem Ende durch ein weiteres Wandelement 20 verbunden und somit die Wand in dieser Richtung durch die gebogene Platte 32 abgeschlossen ist. Auf der gegenüberliegenden Seite sehen die Abwinklungen 29 bzw. 31 der Ω-förmigen Elemente 16 bzw. 18 vor, an die nun sogenannte Erweiterungselemente angesetzt werden können.

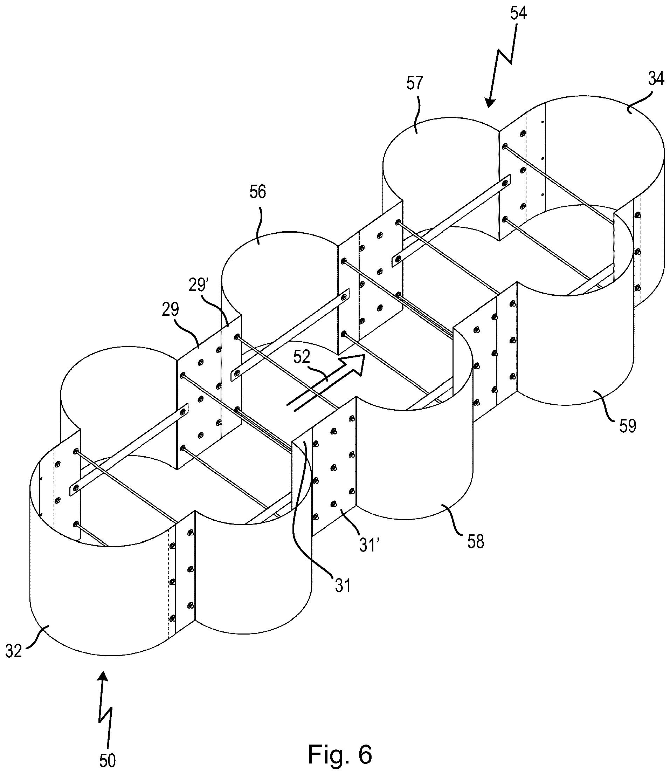

In der Darstellung von Fig. 6 ist ersichtlich, dass an das aus Fig. 5 ersichtliche Basiselement 50 jeweils zwei weitere Ω-förmige Wandelemente 56 und 57 bzw. 58 und 59 befestigt sind. Dabei sind die Ω-förmigen Wandelemente 56 bis 59 identisch ausgebildet wie die Ω-förmigen Elemente 16 und 18.

Aus Fig. 6 ist ersichtlich, dass die beiden Ω-förmigen Wandelemente 56 und 58 über deren hier nicht näher bezeichnete Abwinklungen untereinander verbunden sind und dass die entsprechende Abwinklung 29' des Ω-förmigen Wandelementes 56 mit der Abwinklung 29 des Basiselementes 50 verbunden ist.

Gleiches gilt für die Befestigung der Ω-förmigen Wandelemente 58 und 59 untereinander bzw. der Befestigung des Ω-förmigen Wandelementes 58 über dessen Abwinklung 31' mit der entsprechenden Abwinklung 31 des Basiselementes 50.

Am äußeren, in der Darstellung von Fig. 6 rechten Ende sind die endseitigen Ω-förmigen Wandelemente 57 und 59 wieder über eine gebogene Platte 34 miteinander verbunden, die dem zweiten weiteren Wandelement 22 entspricht.

Somit entsteht dann das in Fig. 6 ersichtliche Gebilde, das gegenüber dem Grundelement 12 entsprechend länger ausgebildet ist, dennoch aber aus denselben prinzipiellen Bauteilen aufgebaut ist und lediglich in der Erweiterungsrichtung 52, wie das durch einen Pfeil angedeutet ist, durch ein Erweiterungselement 54 erweitert ist.

Die Erweiterung in Fig. 6 ist durch zwei Paare an gegenüberliegenden Ω-förmigen Wandelementen 56 und 58 bzw. 57 und 59 dargestellt, sie kann kürzer oder auch länger sein.

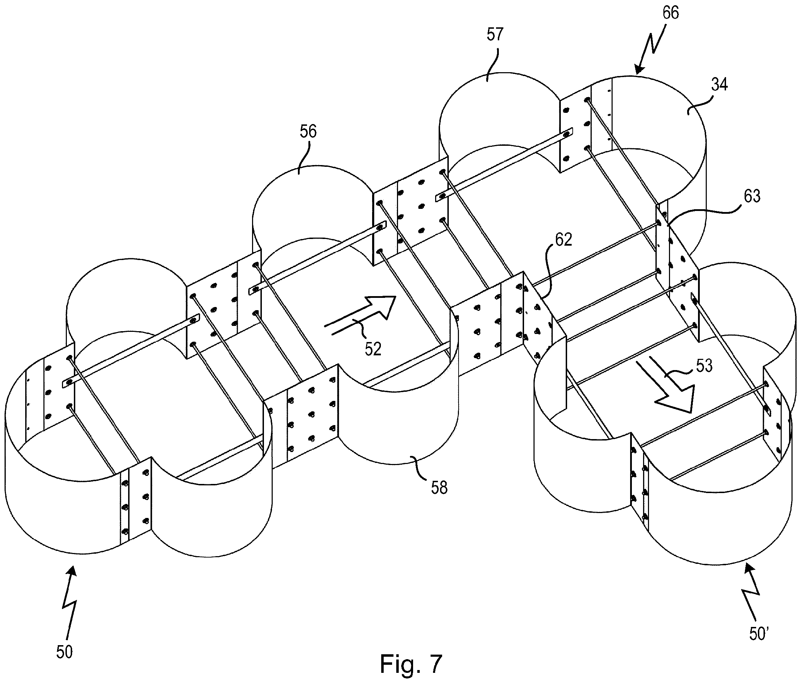

In Fig. 7 ist eine Variante dargestellt, bei der zunächst an das Basiselement 50 in der zuvor erwähnten Erweiterungsrichtung 52 ein weiteres Paar an Ω-förmigen Wandelementen 56 und 58 montiert ist. An dem Ω-förmigen Wandelement 56 ist in der Erweiterungsrichtung 52 ein weiteres Ω-förmiges Wandelement 57 montiert. An der Abwinklung des Ω-förmigen Wandelementes 58 ist ein Winkelblech 62 montiert, das etwa rechtwinklig abgewinkelt ist.

Am äußeren Ende des Ω-förmigen Wandelementes 57 ist eine Platte 34 montiert, an deren gegenüberliegenden äußeren Ende ein weiteres Winkelblech 63 montiert ist.

Die Winkelbleche 62 und 63 bilden somit seitlich um 90° aus der Erweiterungsrichtung 52 vorstehende Montageflansche dar, an die beispielsweise ein weiteres Basiselement 50' montiert werden kann, und zwar dann in der in Fig. 7 dargestellten Erweiterungsrichtung 53.

Insgesamt entsteht dann ein Gebilde, das abgewinkelt ist. Auch hier ist das resultierende Gesamtgebilde aus den Bauteilen aufgebaut, aus denen schon das Grundelement 12 ausgebildet ist, und es sind lediglich die Winkelbleche 62 und 63 zusätzlich notwendig.

Es ist einleuchtend, dass in der Erweiterungsrichtung 53 nicht nur ein, sondern weitere solche Elemente angesetzt werden können, so dass beispielsweise ein gleichwinklig abgewinkeltes Gebilde entsteht. Durch die Verbindung der Abwinklungen untereinander sind jeweils Nischen für die Handhabungsperson geschaffen, um möglichst nahe an die inneren Räume des resultierenden Hochbeetes herantreten zu können.

Dies ist insbesondere in dem Bereich ersichtlich, in dem das Winkelblech 62 angebracht ist, d.h. eine Person kann auch in diesem Winkelbereich nahe herantreten, um Manipulationen im Innenraum des Hochbeetes vorzunehmen.

Aus Fig. 7 ist ersichtlich, dass zum Aufbau dieses Gebildes zwei Basiselemente 50, 50' notwendig sind, zwei Winkelbleche 62 und 63 sowie entsprechend weitere Ω-förmige Wandelemente 56, 57 und 58.

Es ist ferner ersichtlich, dass ein relativ einfaches modulares System geschaffen ist, das auf Wunsch eines Kunden zu zahlreichen Geometrien zusammensetzbar ist, deren äußeres Erscheinungsbild aber von den Rundungen der Ω-förmigen Elemente und den Rundungen der endseitigen plattenförmigen Wandelementen geprägt ist. Man kann die Ausgestaltung von Fig. 7 als einen Bausatz von zwei Basiselementen 50 und 50' und einem Erweiterungselement 66 darstellen.

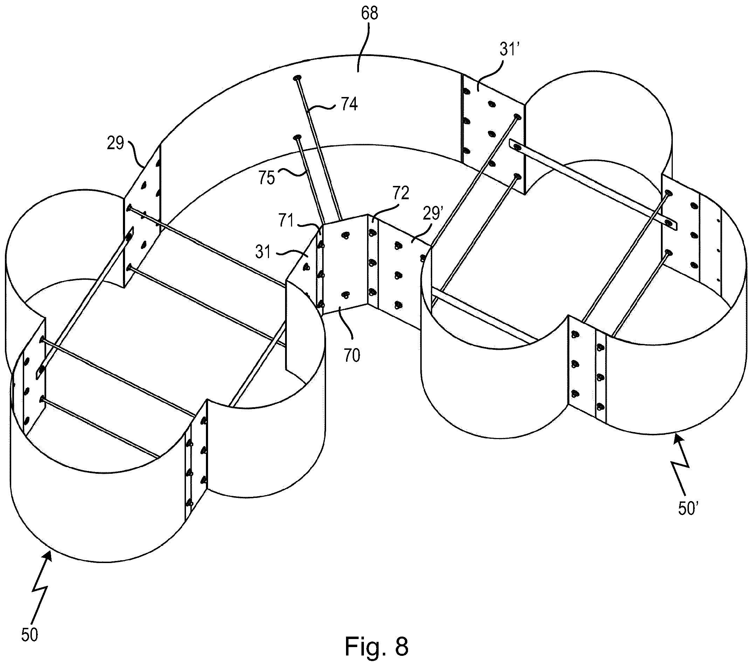

In Fig. 8 ist eine andere Variante einer Erweiterung dargestellt, bei der ein Gebilde eines Hochbeetes entsteht, das über Rundungen sanft gekrümmt ist.

Aus Fig. 8 ist ersichtlich, dass dieses Gebilde wieder aus zwei Basiselementen 50, 50' ausgebildet sind. Die Abwinklung 29 des Basiselementes 50 ist über eine gekrümmte Platte 68 mit der entsprechenden Abwinklung 31' des Basiselementes 50' verbunden.

Die Abwinklung 31 des Basiselementes 50 ist über eine Platte 70 mit zwei seitlich abgewinkelten Flanschen 71 und 72 mit der entsprechenden Abwinklung 29' des Basiselementes 50 verbunden. Die Platte 70 kann einteilig oder aus drei Teilen zusammengesetzt sein.

Der Körper der Platte 70 kann gegebenenfalls auch bogenförmig gekrümmt sein. Im Bereich des Scheitelpunktes der gekrümmten Platte 68 sind nun noch zwei zusätzliche Distanzstangen 74 und 75 übereinander angeordnet, um für eine Stabilität der Wand in diesem Bereich zu sorgen.

Im Zusammenhang mit den Fig. 1 bis 8 wurden jeweils Varianten beschrieben, bei denen die Wand aus biegsamen plattenförmigen Materialien aufgebaut werden kann, die dem Kunden hersteller- oder verkaufsseitig als ungebogene Elemente angeboten werden können. Dies erleichtert den Transport von der Verkaufsstelle zu dem Gartenbereich, in dem das Hochbeet aufgestellt werden soll.

Wie eingangs erwähnt, ist es aber auch möglich, das Hochbeet aus bereits vorgeformten Wandelementen aufzubauen. Dabei können dann materialstärkere Wandelemente herangezogen werden oder Materialien herangezogen werden, die eben nicht elastisch biegsam sind.

Wenn beispielsweise das Hochbeet keine sehr großen Ausmaße aufweisen soll und in Räumlichkeiten aufgestellt werden sollen, die geschützt sind, beispielsweise in Eingangshallen von großen Gebäuden, können auch Materialien herangezogen werden, die nicht unbedingt witterungsfest sein müssen.

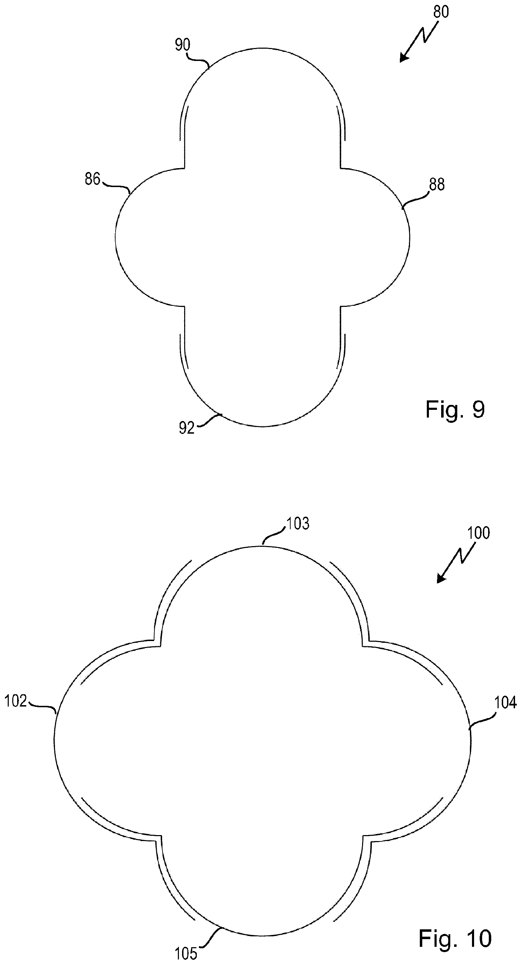

In Fig. 9 ist eine Ausgestaltung eines Hochbeetes 80 dargestellt, das aus zwei Ω-förmig vorgebogenen Wandelementen 86 und 88 ausgebildet ist, die über zwei in dieser Form bereits vorgebogenen weiteren Wandelementen 90 und 92 untereinander verbunden sind. Letztendlich entsteht dann ein Gebilde, das in seiner Erscheinungsform dem Grundelement 12 von Fig. 1 entspricht. Sind die Wandelemente 86 bis 92 aus entsprechend steifen oder festen Materialien hergestellt, können die Streben und Abstandhalter entfallen.

In Fig. 10 ist eine weitere Variante eines Hochbeetes 100 dargestellt, das aus vier identischen Ω-förmigen Wandelementen 102 bis 105 ausgebildet ist. Auch hier können biegsame Materialien herangezogen werden, denn wenn der Überlappungsbereich der Abwinklungen, wie in Fig. 10 dargestellt ist, relativ groß ist, stehen ausreichend Befestigungsstellen zur Verfügung, um ein in sich unveränderbares Gebilde herzustellen, auch wenn es mit Erde gefüllt ist. Sind die Materialien entsprechend dünnwandig, können dann entsprechende Streben oder Abstandhalter zusätzlich vorgesehen sein.

Bei den vorstehend beschriebenen Ausführungsbeispielen war die Höhe der die Wand des Hochbeetes aufbauenden Wandelemente gleich. Es ist auch möglich, Wandelemente unterschiedlicher Höhe einzusetzen. Nimmt man beispielsweise Fig. 6 heran, so könnte die Höhe der Wandelemente, die das Basiselement 50 bilden, größer sein als die Höhe der Wandelemente des Erweiterungselementes 54. Dadurch entsteht eine abgestufte Ausgestaltung der Oberkante der Wand eines Hochbeetes. Es können mehrere unterschiedlich hohe Baugruppen eingesetzt werden, so dass eine treppenartige Kontur der Oberkante entsteht.

Insgesamt ist ersichtlich, dass sehr viele Variationen möglich sind, die letztendlich ein ähnliches Erscheinungsbild des Gesamtkörpers ergeben, die den gesamten Innenraum des Hochbeetes für die Handhabungsperson einfach zugänglich machen und die einfach herstellbar und montierbar sind.

## Patentansprüche

1. Hochbeet, bestehend aus einem umfänglich geschlossenen Körper in Form einer hochstehenden Wand (14), wobei die Wand (14) zumindest aus folgenden Wandelementen aufgebaut ist, nämlich
zwei hochstehenden plattenförmigen Wandelementen (24, 26), die an gegenüberliegenden hochstehenden Kanten jeweils eine etwa 90°-Abwinklung (28, 29; 30, 31) aufweisen, wobei jedes dieser Wandelemente (24, 26) zu einem im Horizontalschnitt Ω-förmigen Element (16, 18) geformt ist, die spiegelbildlich und im Abstand (48) zueinander derart angeordnet sind, dass sich die offenen Enden (35, 37) der Ω-förmigen Elemente (16, 18) gegenüberstehen, und
dass die beiden Ω-förmigen Elemente (16, 18) über die jeweils gegenüberliegenden Abwinklungen (28, 29; 30, 31) mit jeweils einem weiteren gekrümmten plattenförmigen Wandelement (20, 22) verbunden sind.

2. Hochbeet nach Anspruch 1, **dadurch gekennzeichnet, dass** die jeweils weiteren gekrümmten plattenförmigen Elementen (20, 22) spiegelbildlich angeordnet und ausgebildet sind.

3. Hochbeet nach Anspruch 1 oder 2, **dadurch gekennzeichnet, dass** die Krümmungen (21, 23) der weiteren gekrümmten plattenförmige Elemente (20, 22) in etwa den Krümmungen (17, 19) der Ω-förmigen Elemente (16, 18) entsprechen.

4. Hochbeet nach Anspruch 3, **dadurch gekennzeichnet, dass** die Krümmungen (17, 19; 21, 23) jeweils einen Halbkreis aufweisen.

5. Hochbeet nach einem der Ansprüche 1 bis 4, **dadurch gekennzeichnet, dass** eines der weiteren gekrümmten plattenförmigen Elemente (20) als ein seitliches Abschlusselement der Wand (14) ausgebildet ist, und dass das andere gegenüberliegende weitere gekrümmte Wandelement als Erweiterungselement (54, 66) ausgebildet ist.

6. Hochbeet nach Anspruch 5, **dadurch gekennzeichnet, dass** das Erweiterungselement (54, 66) zumindest ein weiteres Paar an gegenüberliegenden Ω-förmigen Elementen (56, 57; 58, 59) aufweist, die über deren Abwinklungen (29', 31') an einem Ende mit den Abwinklungen (29, 31) der bereits vorhandenen Ω-förmigen Elemente (16, 18) verbunden sind, und die am anderen Ende in eine Erweiterungsrichtung (52, 53) über ein die Wand (14) abschließendes gekrümmtes Abschlusselement (34) verbunden sind.

7. Hochbeet nach Anspruch 5 oder 6, **dadurch gekennzeichnet, dass** das Erweiterungselement hochstehende plattenförmige Zwischenelemente aufweist, die jeweils mit den Abwinklungen der bereits vorhandenen Ω-förmigen Elemente verbunden sind und die derart abgewinkelt oder gebogen sind, dass eine Erweiterungsrichtung (53) resultiert, die von einer Erweiterungsrichtung (52), die in der Spiegelebene der vorhandenen gegenüberliegenden Ω-färmigen Grundelementen (16, 18) liegt, abweicht.

8. Hochbeet nach einem der Ansprüche 1 bis 7, **dadurch gekennzeichnet, dass** die Wand (14) aus biegsamen plattenförmigen Materialien aufgebaut ist.

9. Hochbeet nach einem der Ansprüche 1 bis 8, **dadurch gekennzeichnet, dass** die Wandelemente aus ursprünglich ungebogenen plattenförmigen Wandelementen (24, 26; 32, 34) bereitstellbar sind, wobei die später Ω-förmigen Elemente (16, 18) bereits mit den Abwinklungen (28, 29; 30, 31) versehen sind und die ungebogenen plattenförmigen Elemente (24, 26; 32, 34) bei der Montage der Wand (14) zu den gekrümmten Wandkörpern biegbar sind.

10. Hochbeet nach einem der Ansprüche 1 bis 9, **dadurch gekennzeichnet, dass** die Ω-förmigen Elemente (16, 18) über eine Strebe (36, 38), die das offene Ende (35, 37) des jeweiligen Ω-förmigen Elementes (16) überspannt, in der Ω-förmigen Ausrichtung haltbar sind.

11. Hochbeet nach einem der Ansprüche 1 bis 10, **dadurch gekennzeichnet, dass** zwei jeweils gegenüberliegende Ω-förmigen Elemente (16, 18) über Abstandhalter (40, 41; 42, 43) in dem Abstand (48) gehalten sind.

12. Verfahren zum Montieren eines Hochbeetes (10), das aus einem umfänglich geschlossenen Körper in Form einer hochstehenden Wand (14) aufgebaut ist, mit den folgenden Schritten:
Bereitstellen von zumindest zwei hochstehenden ungebogenen plattenförmigen Wandelementen (24, 26), die an gegenüberliegenden hochstehenden Kanten eine etwa 90°-Abwinkiung (28, 29; 30, 31) aufweisen,
Bereitstellen von zumindest zwei weiteren ungebogenen plattenförmigen Wandelementen (20, 22),
Biegen der beiden plattenförmigen Wandelementen (24, 26) mit den Abwinklungen zu einem im Horizontalschnitt Ω-förmigen Element (16, 18),
spiegelbildliches Anordnen der beiden Ω-förmigen Elemente (16, 18) in einem Abstand (48) und derart, dass die offenen Seiten (35, 37) des Ω gegenüberliegen, Verbinden der jeweils gegenüberliegenden Abwinklungen der beiden Ω-förmigen Elemente (16, 18) jeweils über gegenüberliegende Enden der weiteren plattenförmigen Elemente (20, 22), wobei der Abstand derart gewählt ist, dass die ausgangs ungebogenen weiteren plattenförmigen Elemente (20, 22) dabei bogenförmig gekrümmt werden.

13. Verfahren nach Anspruch 12, **dadurch gekennzeichnet, dass** zumindest an einer Seite der gegenüberliegenden Ω-förmigen Elemente (16, 18) zumindest ein Erweiterungselement (54, 66) montiert wird.

14. Bausatz für ein Hochbeet nach einem der Ansprüche 1 bis 11, wobei die Wandelemente (24, 26) als einzelne Elemente enthalten sind.

15. Bausatz nach Anspruch 14, **dadurch gekennzeichnet, dass** in der Ausgestaltung des Hochbeetes (10) nach Anspruch 9 die Wandelemente (24, 26; 32, 34) in ungebogenem plattenförmigem Zustand enthalten sind.

## Claims

1. Raised bed comprising a circumferentially closed body in the form of an upright wall (14), wherein the wall (14) is constructed at least from the following wall elements:
two upright panel-like wall elements (24, 26), each having an approximately 90°-angled portion (28, 29; 30, 31) along opposite upright edges, wherein each of these wall elements (24, 26) is formed into a Ω-shape element (16, 18), as seen in horizontal section, and said elements are arranged in a mirror-inverted manner, and at a distance (48) from one another, such that the open ends (35, 37) of the Ω-shaped elements (16, 18) stand opposite one another, and
the two Ω-shape elements (16, 18) are each connected, via the respectively opposite angled portions (28, 29; 30, 31), to a further curved panel-like wall element (20, 22).

2. Raised bed according to Claim 1, **characterized in that** the respectively further curved panel-like elements (20, 22) are arranged, and formed, in a mirror-inverted manner.

3. Raised bed according to Claim 1 or 2, **characterized in that** the curvatures (21, 23) of the further curved panel-like elements (20, 22) correspond approximately to the curvatures (17, 19) of the Ω-shaped elements (16, 18).

4. Raised bed according to Claim 3, **characterized in that** the curvatures (17, 19; 21, 23) each have a semicircle.

5. Raised bed according to one of Claims 1 to 4, **characterized in that** one of the further curved panel-like elements (20) is designed in the form of a lateral termination element of the wall (14), and **in that** the other further curved wall element, located opposite, is designed in the form of an extension element (54, 66).

6. Raised bed according to Claim 5, **characterized in that** the extension element (54, 66) has at least one further pair of opposite Ω-shape elements (56, 57; 58, 59), which are connected, at one end, via their angled portions (29', 31'), to the angled portions (29, 31) of the already present Ω-shape elements (16, 18), and which are connected at the other end, in an extension direction (52, 53), via a curved termination element (34), which terminates the wall (14).

7. Raised bed according to Claim 5 or 6, **characterized in that** the extension element has upright panel-like intermediate elements, which are each connected to the angled portions of the already present Ω-shape elements and are angled, or bent, to give an extension direction (53) which differs from an extension direction (52), which is located in the mirror plane of the opposite Ω-shape basic elements (16, 18) present.

8. Raised bed according to one of Claims 1 to 7, **characterized in that** the wall (14) is constructed from flexible panel-like materials.

9. Raised bed according to one of Claims 1 to 8, **characterized in that** the wall elements can be produced from panel-like wall elements (24, 26; 32, 34) which are not bent in their original state, wherein the subsequently Ω-shape elements (16, 18) are already provided with the angled portions (28, 29; 30, 31) and the non-bent panel-like elements (24, 26; 32, 34) can be bent to form the curved wall bodies when the wall (14) is being assembled.

10. Raised bed according to one of Claims 1 to 9, **characterized in that** the Ω-shape elements (16, 18) can be retained in the Ω-shape orientation by a strut (36, 38), which spans the open end (35, 37) of the respective Ω-shape element (16).

11. Raised bed according to one of Claims 1 to 10, **characterized in that** two respectively opposite Ω-shape elements (16, 18) are kept at the distance (48) via spacers (40, 41; 42, 43).

12. Method of assembling a raised bed (10) which is constructed from a circumferentially closed body in the form of an upright wall (14), having the following steps:
providing at least two upright, non-bent panel-like wall elements (24, 26), which have an approximately 90°-angled portion (28, 29; 30, 31) along opposite upright edges,
providing at least two further non-bent panel-like wall elements (20, 22),
bending the two panel-like wall elements (24, 26) with the angled portions to form an Ω-shape element (16, 18), as seen in horizontal section,
arranging the two Ω-shape elements (16, 18) in a mirror-inverted manner at a distance (48) apart and such that the open sides (35, 37) of the Ω are located opposite one another,
connecting the respectively opposite angled portions of the two Ω-shape elements (16, 18) in each case via opposite ends of the further panel-like elements (20, 22), wherein the distance is selected such that the further panel-like elements (20, 22), which are not bent in their initial state, are curved in arcuate form in the process.

13. Method according to Claim 12, **characterized in that** at least one extension element (54, 66) is fitted at least on one side of the opposite Ω-shape elements (16, 18).

14. Kit for a raised bed according to one of Claims 1 to 11, wherein the wall elements (24, 26) are contained in the kit in the form of individual elements.

15. Kit according to Claim 14, **characterized in that**, in the configuration of the raised bed (10) according to Claim 9, the wall elements (24, 26; 32, 34) are contained in the kit in a non-bent panel-like state.

## Revendications

1. Plate-bande surélevée, constituée d'un corps fermé sur la périphérie en forme de paroi verticale (14), la paroi (14) étant constituée au moins des éléments de paroi suivants, à savoir
deux éléments de paroi verticaux en forme de plaque (24, 26), qui présentent au niveau de bords verticaux opposés à chaque fois un coude d'environ 90° (28, 29 ; 30, 31), chacun de ces éléments de paroi (24, 26) étant formé en un élément en forme d'Ω en coupe horizontale (16, 18), qui sont disposés les uns par rapport aux autres avec une symétrie spéculaire et à une distance (48) les uns des autres, de telle sorte que les extrémités ouvertes (35, 37) des éléments en forme d'Ω (16, 18) soient opposées les unes aux autres, et
que les deux éléments en forme d'Ω (16, 18) sont reliés par le biais des coudes respectivement opposés (28, 29 ; 30, 31) à chaque fois à un élément de paroi supplémentaire en forme de plaque courbe (20, 22).

2. Plate-bande surélevée selon la revendication 1, **caractérisée en ce que** les éléments supplémentaires respectifs en forme de plaque courbes (20, 22) sont disposés et réalisés avec une symétrie spéculaire.

3. Plate-bande surélevée selon la revendication 1 ou 2, **caractérisée en ce que** les courbures (21, 23) des éléments supplémentaires en forme de plaque courbes (20, 22) correspondent approximativement aux courbures (17, 19) des éléments en forme d'Ω (16, 18).

4. Plate-bande surélevée selon la revendication 3, **caractérisée en ce que** les courbures (17, 19 ; 21, 23) présentent chacune un demi-cercle.

5. Plate-bande surélevée selon l'une quelconque des revendications 1 à 4, **caractérisée en ce que** l'un des éléments supplémentaires en forme de plaque courbes (20) est réalisé sous forme d'élément de terminaison latéral de la paroi (14) et **en ce que** l'autre élément de paroi courbe supplémentaire opposé est réalisé sous forme d'élément d'élargissement (54, 66).

6. Plate-forme surélevée selon la revendication 5, **caractérisée en ce que** l'élément d'élargissement (54, 66) présente au moins une paire supplémentaire d'éléments en forme d'Ω opposés (56, 57 ; 58, 59) qui sont raccordés par le biais de leurs coudes (29', 31') à une extrémité aux coudes (29, 31) des éléments en forme d'Ω déjà présents (16, 18), et qui sont raccordés à l'autre extrémité dans une direction d'élargissement (52, 53) par le biais d'un élément de terminaison courbe (34) terminant la paroi (14).

7. Plate-forme surélevée selon la revendication 5 ou 6, **caractérisée en ce que** l'élément d'élargissement présente des éléments intermédiaires verticaux en forme de plaque qui sont à chaque fois raccordés aux coudes des éléments en forme d'Ω déjà présents et qui sont coudés ou cintrés de telle sorte que l'on obtienne une direction d'élargissement (53) qui s'écarte d'une direction d'élargissement (52) qui est située dans le plan miroir des éléments de base en forme d'Ω présents opposés (16, 18).

8. Plate-forme surélevée selon l'une quelconque des revendications 1 à 7, **caractérisée en ce que** la paroi (14) est constituée de matériaux en forme de plaques flexibles.

9. Plate-forme surélevée selon l'une quelconque des revendications 1 à 8, **caractérisée en ce que** les éléments de paroi peuvent être fournis à partir d'éléments de paroi (24, 26 ; 32, 34) en forme de plaque initialement non courbes, les éléments ultérieurement en forme d'Ω (16, 18) étant déjà pourvus des coudes (28, 29 ; 30, 31) et les éléments en forme de plaque non courbes (24, 26 ; 32, 34) pouvant être fléchis pour former les corps de paroi courbes lors du montage de la paroi (14).

10. Plate-forme surélevée selon l'une quelconque des revendications 1 à 9, **caractérisée en ce que** les éléments en forme d'Ω (16, 18) peuvent être retenus dans l'orientation en forme d'Ω par le biais d'une entretoise (36, 38) qui s'étend par-dessus l'extrémité ouverte (35, 37) de l'élément respectif en forme d'Ω (16).

11. Plate-forme surélevée selon l'une quelconque des revendications 1 à 10, **caractérisée en ce que** deux éléments en forme d'Ω respectivement opposés (16, 18) sont maintenus à la distance (48) par le biais d'éléments d'espacement (40, 41 ; 42, 43).

12. Procédé de montage d'une plate-forme surélevée (10) qui est construite à partir d'un corps fermé sur la périphérie, en forme de paroi verticale (14), comprenant les étapes suivantes :
fourniture d'au moins deux éléments de paroi verticaux en forme de plaque non cintrés (24, 26) qui présentent, au niveau de bords verticaux opposés, un coude d'environ 90° (28, 29 ; 30, 31),
fourniture d'au moins deux autres éléments de paroi en forme de plaque non cintrés (20, 22),
cintrage des deux éléments de paroi en forme de plaque (24, 26) avec les coudes pour former un élément en forme d'Ω en coupe horizontale (16, 18),
disposition, avec une symétrie spéculaire, des deux éléments en forme d'Ω (16, 18) à une distance (48) et ce de telle sorte que les côtés ouverts (35, 37) de l'Ω soient opposés,
raccordement des coudes respectivement opposés des deux éléments en forme d'Ω (16, 18) à chaque fois par le biais d'extrémités opposées des éléments supplémentaires en forme de plaque (20, 22), la distance étant choisie de telle sorte que les éléments supplémentaires en forme de plaque non cintrés au départ (20, 22) soient ainsi courbés en forme d'arc.

13. Procédé selon la revendication 12, **caractérisé en ce qu'**au moins au niveau d'un côté des éléments opposés en forme d'Ω (16, 18) est monté au moins un élément d'élargissement (54, 66).

14. Kit de construction pour une plate-forme surélevée selon l'une quelconque des revendications 1 à 11, les éléments de paroi (24, 26) étant contenus sous forme d'éléments distincts.

15. Kit de construction selon la revendication 14, **caractérisé en ce que** dans la configuration de la plate-forme surélevée (10) selon la revendication 9, les éléments de paroi (24, 26 ; 32, 34) sont contenus dans l'état en forme de plaque non cintré.
